(19) **Europäisches Patentamt / European Patent Office / Office européen des brevets**

(11) **EP 3 499 330 B1**

(12) **EUROPEAN PATENT SPECIFICATION**

(45) Date of publication and mention
of the grant of the patent:
**28.08.2024 Bulletin 2024/35**

(21) Application number: **18194546.0**

(22) Date of filing: **14.09.2018**

(51) International Patent Classification (IPC):
***G05B 19/418*** *(2006.01)*

(52) Cooperative Patent Classification (CPC):
**G05B 19/41875;** G05B 2219/32177;
G05B 2219/37514; Y02P 90/02

(54) **MANAGEMENT SYSTEM, MANAGEMENT DEVICE, MANAGEMENT METHOD, AND PROGRAM**

VERWALTUNGSSYSTEM, VERWALTUNGSVORRICHTUNG, VERWALTUNGSVERFAHREN UND PROGRAMM

SYSTÈME DE GESTION, DISPOSITIF DE GESTION, PROCÉDÉ DE GESTION ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.11.2017 JP 2017227198**

(43) Date of publication of application:
**19.06.2019 Bulletin 2019/25**

(73) Proprietor: **OMRON CORPORATION**
**Kyoto-shi, Kyoto 600-8530 (JP)**

(72) Inventors:
• **MORI, Hiroyuki**
**KYOTO, 600-8530 (JP)**

• **NAKAJIMA, Katsuki**
**KYOTO, 600-8530 (JP)**
• **TANAKA, Mayuko**
**KYOTO, 600-8530 (JP)**

(74) Representative: **Ter Meer Steinmeister & Partner**
**Patentanwälte mbB**
**Nymphenburger Straße 4**
**80335 München (DE)**

(56) References cited:
**EP-A2- 1 071 128     US-A- 5 440 478**

EP 3 499 330 B1

## Description

## BACKGROUND

Technical Field

The disclosure relates to a technology for detecting abnormality of manufacturing equipment which is a cause or a sign of defect occurrence.

Description of Related Art

In production lines in which automation and labor saving have progressed, inspection devices are installed in intermediate processes or final processes of the lines to automate detection of defects, sorting of defective products, or the like. In addition, attempts to estimate causes of defects from inspection results of the inspection devices and utilize the causes of the defects in quality management or maintenance of manufacturing equipment have been made.

For example, as an example of the related art regarding a surface mount line of a printed board, Patent Document 1 discloses an idea to present information of nozzles deteriorating quality levels by aggregating proportion defectives in the final inspection after a reflow according to the nozzles of a mounter device. In addition, Patent Document 2 proposes a method of calculating proportion defectives of components in inspection after a reflow according to nozzles and feeders of a mounter device and detecting a nozzle or a feeder in which abnormality is detected according to whether the proportion defectives exceed proportion defectives at a normal time.

Patent Document 3 discloses a method and apparatus for inspecting a semiconductor wafer provides real-time information identifying tools visited by wafers under inspection and the process parameters used at those tools and displays this information at the wafer inspection tool. Embodiments include inspecting a wafer using an inspection tool, such as a CCD imager, generating a list of the tools visited by the wafer from data retrieved from a conventional manufacturing execution system and displaying the list at the inspection tool, along with a defect map. The user may then request that a set of process parameters and tool parameters for any of the tools identified on the list be displayed at the inspection tool. Thus, at the time that defects are discovered, the user is automatically provided with a list of the tools visited by the wafer and has easy access to the process parameters used at each of those tools. This information facilitates tracing the causes of defects to their source, such as to a particular process step or to a particular piece of processing equipment and enables early and effective corrective action to be implemented.

Patent Document 4 discloses a method and system for controlling a manufacturing process statistical process control data or other statistical indicators of performance from the production process and specification data are displayed in both tables and bar-type graphs. The graphic display enables the production manager to easily see both out of specification activity and trends so that he can adjust the manufacturing process accordingly before the production run is completed.

Patent Documents

[Patent Document 1] Japanese Unexamined Patent Application Publication No. 2005-156156
[Patent Document 2] Japanese Unexamined Patent Application Publication No. 2006-332461
[Patent Document 3] European Patent Application Publication No. 1 071 128 A2
[Patent Document 4] US Patent No. 5440478 A

## SUMMARY

As in the foregoing example of the related art, when information such as a proportion defective according to members included in a manufacturing device (referred to as device members) is presented, there is a possibility of a clue for estimating a faulty spot. However, the fact known from this information is merely a fact that there are many defects in products processed by the device members and a conclusive evidence of whether direct causes of the defects in the device members are really in the products may not be obtained. In a mounter, for example, this is because a possibility of a cause being in a device member other than a nozzle or a feeder can be considered and a possibility of a cause being in another process such as a solder printing process or a reflow process can also be considered. In addition, a case in which there is no cause in a manufacturing device or a device member, a case in which there is a cause in a component, and a case in which a combination of a specific component and a specific device member is a cause can also be considered.

Even when a device member which is a cause of a defect can be specified, which abnormality occurs in the device member occurs may not be specified in the method of the related art. Accordingly, even when a faulty spot can be known, the knowledge and experience of an expert were indispensable or adjustment work by trial and error was necessary in order to take appropriate measures to find and solve actually occurring abnormality. In a mounter, for example, even when a nozzle in which defects frequently occur is known, whether it is necessary to exchange the nozzle, whether the nozzle is cleaned or mounting of the nozzle is adjusted, or whether countermeasures are taken by modifying a mounting program of a mounter or countermeasures are taken in a device member or a component other than the nozzle may not be determined.

The disclosure is devised in view of the foregoing circumstances and an objective of the disclosure is to provide a technology for specifically identifying whether one of a device member, a component, and a combination of the device member and the component is a direct cause of a defect in manufacturing equipment of products and causing maintenance and quality management of equipment to be efficient.

The above identified problems are solved by the features of the independent claims. In order to achieve the objective, there is provided a management system of manufacturing equipment that manufactures a product. The manufacturing equipment includes one or more manufacturing devices including one or more device members and one or more inspection units that inspect a quality of the product. The management system includes: a product member information acquisition unit configured to acquire product member information for each product member included in the product; a device member information acquisition unit configured to acquire device member information regarding each device member of the manufacturing device; a quality information acquisition unit configured to acquire quality information regarding each product member including an inspection result obtained by the abnormality in one of the device member, the product member, a combination of the device member and the product member, a combination of the device member and the device member information, and a combination of the device member, the device member information, and the product member and identify a cause of the abnormality, using the quality information.

Here, the "manufacturing equipment" is general equipment that manufactures a product and is, for example, a manufacturing factory, a production line, or a manufacturing device. The "manufacturing device" is any of various devices that manufacture products and includes, for example, each device of a printed board production line, such as a solder printer, a mounter, or a reflow furnace, a manufacturing device of various product members included in a printed board, and a manufacturing device of solder. The "manufacturing member" is any of various members and mechanism included in a manufacturing device and includes, for example, a nozzle, a head, a feeder, a camera, a pump, and a stage in a mounter device. The "product member" is each element included in a product and includes, for example, an electronic product member such as an IC chip, a printed wiring plate (so-called raw circuit board), and solder on a printed board. The "inspection unit" is, for example, a unit that performs inspection such as automatic optical inspection (AOI) or automatic X-ray inspection (AXI) and may be an inspection unit that reflects information regarding visual inspection. An inspection unit may be contained in the manufacturing device.

The foregoing "product member information" is information regarding a product member and includes, for example, a component number, a reel ID, a manufacturing lot of the product member, a type of product member, the shape of the product member, and the position of the product member on a board. The "device member information" is information regarding a device member and includes, for example, a type of device member, a model of the device member, a device member ID, an activation time of the device member, the number of times the device member is activated, and a mounting parameter. Here, the mounting parameter includes, for example, the position of a feeder of a mounter in a mounter device, an adsorption height of the mounter, and a head speed of the mounter. The "quality information" is information regarding a quality of a product and includes a measured value of performed inspection and a phenomenon (for example, an X axis deviation, a Y axis deviation, an angle deviation, a product member inclination, or product member rising) ascertained from the measured value. Additionally, for example, the quality information may include a proportion defective of a product, a defective number of products, the number of defects per product, a defect occurrence situation in a more downstream process in which the product is used, and a process capability. The process capability will be described below in detail.

The phrase "each product member included in a product" mentioned herein does not mean component one by one used in one product, but means, for example, each product which can be identified on a condition such as the same type of product member disposed at a predetermined spot of a predetermined product.

In this configuration, when there is abnormality in one of the product members included in a product, maintenance or quality management of the manufacturing equipment can be performed efficiently in order to identify whether there is a cause of the abnormality in a device member, a product member, and a combination of the device member and the product member.

The quality information acquisition unit may be the inspection unit in a final inspection process of the product. In this configuration, information regarding inspection performed in a stage in which the product state is decided can be used, and thus quality information in which a genuine state of the product in the process is reflected can be acquired.

Based on the quality information, the device member information, and the product member information, the abnormality analysis unit may identify the cause and determine whether there is the abnormality in one of the device member, the product member, the combination of the device member and the product member, the combination of the device member and the device member information, the combination of the device member, the device member information, and the product member. In this configuration, a combination of the product member information and the device combination information can be analyzed using the quality information, and abnormality and a cause can be found in each combination of the product member information and the device member information.

The abnormality analysis unit may include an abnormality determination unit configured to determine whether there is the abnormality for each product member included in the product based on the quality information, and an abnormality cause identifying unit configured to identify whether there is the cause of the abnormality in one of the combination of the device member and the device member information and the combination of the device member, the device member information, and the product member based on the quality information, the device member information, and the device member information when the abnormality determination unit determines that there is the abnormality in one of the product members included in the product. In this configuration, abnormality can be found using only the quality information. Further, the cause of the abnormality can be identified as necessary.

In accordance with a quality index generated based on the quality information, the abnormality analysis unit may determine whether there is the abnormality in each of the product members.

Here, the quality index is, for example, an index related to a quality determined using an inspection result (for example, a measured value of an X axis position) of each of the plurality of component members processed by a device and a management standard (for example, an allowable threshold of an X axis deviation of the product member) serving as a determination standard of a defective product. In this configuration, by strictly setting the determination standard using the quality index, abnormality of the manufacturing equipment can be found, a cause of the abnormality can be identified, and countermeasure can be taken before a defective product is actually generated. Therefore, it is possible to prevent generation of a defective product in advance.

The manufacturing device in the manufacturing equipment may include a plurality of device members. When it is determined that there is abnormality in one of the product members, the abnormality analysis unit may first identify a device member in which the product member for which it is determined that there is the abnormality is handled, and when there is the same type of different device member in which the same type of product member as the device member in which the product member for which it is determined that there is the abnormality is handled, the abnormality analysis unit may further identify a cause of the abnormality by comparing presence or absence of the abnormality in a combination of the different device member and the product member to presence or absence of the abnormality in the combination of the product member and the device member in which the product member for which it is determined that there is the abnormality is handled.

The manufacturing device in the manufacturing equipment may include a plurality of device members. When it is determined that there is abnormality in one of the product members, the abnormality analysis unit first identifies a device member in which the product member for which it is determined that there is the abnormality is handled, and when there is the same type of different device member in which the same type of product member as the product member for which it is determined that there is the abnormality is handled, the abnormality analysis unit further identifies a cause of the abnormality by comparing device member information of the different product member to device member information of the device member in which the product member for which it is determined that there is the abnormality is handled.

In this configuration, when there is the cause of the abnormality actually in the product member or the combination of the product member and the device member, there is a fault in the device member. Thus, it is possible to prevent wrong measures from being taken, such as unnecessary maintenance or exchange of a member, and thus it is possible to suppress occurrence of an unnecessary man-hour. The same "type" mentioned herein is not completely the same synonym as "product member classification" or "device member classification" and is a concept including, for example, a variance in a product number or a manufacturing lot.

The abnormality analysis unit may automatically determine whether there is the abnormality in each of the product members, and abnormality cause identifying unit may automatically identify the cause of the abnormality. In this configuration, it is possible to determine abnormality and identify a cause of the abnormality with given precision irrespective of an experience or an ability of a user. Since a manipulation of determining the abnormality and identifying the cause of the abnormality is not necessary, it is possible to operate the manufacturing equipment efficiently.

The management system may further include an abnormality cause solution unit configured to perform a process of solving the cause of the abnormality wherein, when the abnormality analysis unit identifies the cause of the abnormality. In this configuration, it is possible to shorten a time of a process until the cause of the abnormality is solved.

The process performed by the abnormality cause solution unit may cause the manufacturing device to perform a method of solving the cause of the abnormality identified by the abnormality cause identifying unit, may present the method of solving the identified cause of the abnormality to a user, or may cause the manufacturing device to perform the method of solving the identified cause of the abnormality by a permission given by the user. In any of the processes, when the user examines and performs a method of solving the cause of the abnormality from the beginning, it is also possible to shorten a time necessary to solve the cause of the abnormality.

The management system may further include an output unit. The output unit outputs the quality information regarding the product members included in the product for each device member and/or each product member. The output unit may be a display device and the quality information regarding the product members included in the product may be output visually. In this configuration, the user can confirm the quality information, and thus appropriate determination can be performed when decision related to the process of solving the cause of the abnormality can be performed.

Here, the "output unit" is not limited to a display device, and any output unit such as a speaker, a printer, and a communication device is included. The visually output information may be information expressed in a sentence, may be numerical information, or may be expressed with a graph.

The manufacturing equipment may be a surface mount line of a printed board. The manufacturing device may be one of a solder printer, a mounter, and a reflow furnace. The quality information acquisition unit may be an inspection unit after a reflow. In the manufacturing equipment of the surface mount line, in particular, the mounter, a plurality of types of device members such as a nozzle, a head, a feeder, a camera, a pump, and a stage perform various operations. Therefore, it is not easy to identify a cause of abnormality. Thus, the disclosure functions efficiently.

The disclosure can be ascertained as a management device including at least some of the foregoing units. The disclosure can also be ascertained as the system, a quality management method by a device, a computer program causing a computer to execute each step of the method, or a computer-readable storage medium that non-transitorily stores the program. The foregoing configurations and processes can each be combined to each other to realize the disclosure as long as technical contradiction does not occur.

According to the disclosure, it is possible to provide a technology for specifically identifying whether one of a device member, a product member, and a combination of the device member and the product member is a direct cause of a defect in manufacturing equipment of products and causing maintenance and quality management of equipment to be efficient.

## BRIEF DESCRIPTION OF THE DRAWINGS

FIG. 1 is a diagram illustrating a configuration of manufacturing equipment and a quality management system according to an embodiment.

FIG. 2 is a functional block diagram illustrating a management device according to the embodiment.

FIG. 3 is a schematic diagram illustrating a configuration of a mounter according to the embodiment.

FIG. 4 is a diagram illustrating an example of manufacturing log data.

FIG. 5(A) is a first diagram illustrating a correspondent relation among component information, device member information, and quality information in the mounter according to the embodiment.

FIG. 5(B) is a second diagram illustrating a correspondent relation among component information, device member information, and quality information in the mounter according to the embodiment.

FIG. 5(C) is a third diagram illustrating a correspondent relation among component information, device member information, and quality information in the mounter according to the embodiment.

FIG. 5(D) is a fourth diagram illustrating a correspondent relation among component information, device member information, and quality information in the mounter according to the embodiment.

FIG. 6 is a schematic diagram illustrating a configuration of a quality management system according to an application example.

FIG. 7 is a flowchart illustrating a flow of abnormality cause identification and solution of the quality management system according to the application example.

## DESCRIPTION OF THE EMBODIMENTS

Hereinafter, an example of an embodiment of the disclosure will be described with reference to the drawings.

<Application example>

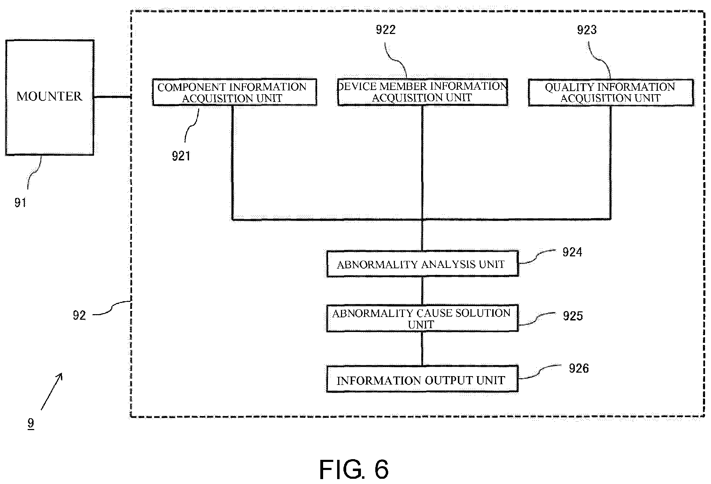

The disclosure can be applied as, for example, a quality management system 9 illustrated in FIG. 6. The quality management system 9 is a management system for managing a quality of a mounter in a surface mount line of a printed board and includes a mounter 91 and a component inspection device 92 as constituent elements.

The mounter 91 is a device that picks up an electronic component to be mounted on a board and mounts components on a solder paste of corresponding spots and is also referred to as a chip mounter.

The component inspection device 92 is a device that inspects disposition states of electronic components on a board carried out from the mounter 91. The component inspection device 92 measures disposition states of components (which may be some of components such as component bodies and electrodes) placed on a solder paste 2-dimensionally or 3-dimensionally and determines whether the disposition states have normal values (allowable ranges) of various inspection items from the measurement results.

As illustrated in FIG. 6, the quality management system 9 includes a component information acquisition unit 921, a device member information acquisition unit 922, a quality information acquisition unit 923, an abnormality analysis unit 924, an abnormality cause solution unit 925, and an information output unit 926, and these functions are mounted on the component inspection device 92. The component information acquisition unit 921 has a function of acquiring information regarding components such as various electronic components, a board, and solders used in the mounter 91. The device member information acquisition unit 922 has a function of acquiring information regarding various members or mechanisms included in the mounter. The quality information acquisition unit 923 has a function of acquiring information regarding an inspection result.

The abnormality analysis unit 924 has a function of analyzing and identifying a cause of the abnormality when there is abnormality in any of the components mounted on the board by the mounter 91. The abnormality cause solution unit 925 has a function of performing a process to solve the identified cause. The information output unit 926 has a function of outputting quality information regarding each component or information regarding an abnormality occurrence spot, a method of solving an abnormality cause, and the like.

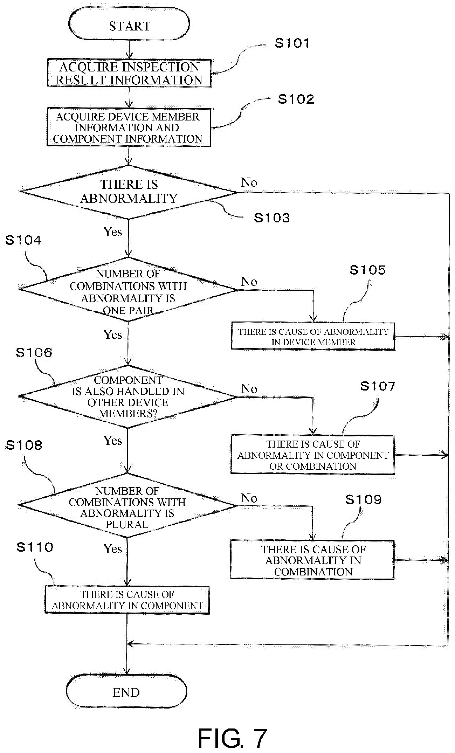

Next, a flow of a process of identifying an abnormality cause of the quality management system 9 will be described with reference to FIG. 7. First, the quality information acquisition unit 923 acquires inspection result information (step S101). Further, the component information acquisition unit 921 and the device member information acquisition unit 922 acquire component information and the device member information (step S102). Then, based on the information, it is determined whether there is abnormality in each combination of a component number and a device member (for example, a feeder) included in the mounter (step S103).

Here, for example, for each combination of the device component and the component number, a quality index is calculated using a measured value (for example, an X axis position) of each of a plurality of mounted components and a predetermined management standard (for example, an allowable threshold of an X axis deviation of a component). It is determined that there is the abnormality when the quality index exceeds a predetermined standard. It is determined that there is no abnormality when the quality index does not exceed the predetermined standard. The determination standard is preferably determined as a strict standard compared to the management standard from the viewpoint of the fact that abnormality of manufacturing equipment is found before a defective product is actually generated and a cause of the abnormality is identified and treated.

For the quality index, the X axis deviation of a component mounted by the mounter has been exemplified above. Alternatively, correspondence to each inspection item can be decided from a measured value of each of the various inspection items.

When the combination in with the abnormality is not found in step S103, the process is terminated temporarily. Conversely, when the combination with the abnormality is found in step S103, the process proceeds to step S104.

In step S104, it is determined whether the number of combinations with the abnormality is one pair or a plurality of pairs. Here, when the number of combinations with the abnormality is plural, it is identified that there is a cause of the abnormality in the device member and the process ends (step S105). Conversely, when there is only one combination with the abnormality in step S104, the process proceeds to step S106.

In step S106, it is confirmed whether a component number of the component with abnormality is also mounted on the same type of different device members. Here, when the component is not mounted on other device members, there is the abnormality in the component or the combination of the device member and the component number, and thus the process is terminated temporarily (step S107).

Conversely, when the component number of the component with the abnormality is mounted on the same type of plurality of device members in step S106, it is determined whether there is the abnormality in each combination of the component number and the device member (step S108).

In step S108, when there is only one combination with the abnormality, it is identified that there is a cause of the abnormality in the combination of the device member and the component number and the process ends (step S109). Conversely, when the number of combinations with the abnormality is plural in step S108, it is identified that there is the cause of the abnormality in the component and the process is terminated (step S110).

When the cause of the abnormality is identified, as described above, the abnormality cause solution unit 925 performs a process of solving the cause of the abnormality in accordance with the identified cause. For example, when there is the cause of the abnormality in the device member, the information output unit 926 notifies a user of maintenance (including exchange) of the device member. When there is the cause of the abnormality in the combination of the device member and the component number, for example, a command may be transmitted to the mounter 91 so that such mounting parameters are changed to appropriate values.

<Embodiment>

Hereinafter, an example of a mode for carrying the disclosure will be described in more detail.

(System configuration)

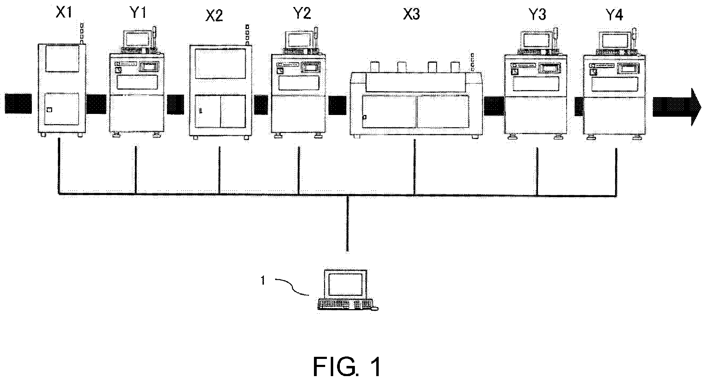

FIG. 1 schematically illustrates a configuration example of manufacturing equipment and a quality management system in a surface mount line of a printed board. Surface mount (surface mount technology: STM) is a technology for soldering electronic components on the surface of a printed board. The surface mount line mainly includes three processes of solder printing, mounting of components, and a reflow (welding of solder).

As illustrated in FIG. 1, in the surface mount line, a solder printing device X1, a mounter X2, and a reflow furnace X3 are provided as manufacturing devices in order from the upstream side. The solder printing device X1 is a device that prints solder on a paste to an electrode portion (referred to as a land) on a printed board by screen printing. The mounter X2 is a device that picks up an electronic component to be mounted on a board and places the component on the solder paste of the corresponding spot and is also referred to as a chip mounter. The reflow furnace X3 is a heating device that heats and melts the solder paste, subsequently performs cooling, and solders and bonds the electronic component on the board. When the number or types of electronic components to be mounted on the board is large, the plurality of mounters X2 are provided in the surface mount line.

In the surface mount line, a quality management system that inspects a board state at an exit of each process of the solder printing, the mounting of the components, and the reflow and automatically detects a defect or concern of the defect is provided. The quality management system also has a function of feeding back an operation of each manufacturing device (for example, changing a mounting program) based on an inspection result or the analysis result in addition to automatic sorting of good products and defective products. As illustrated in FIG. 1, the quality management system according to the embodiment includes the management device 1 and four types of inspection devices, that is, a solder printing inspection device Y1, a component inspection device Y2, an exterior inspection device Y3, an X-ray inspection device Y4.

The solder printing inspection device Y1 is a device that inspects a printing state of the solder paste on the board carried out from the solder printing device X1. The solder printing inspection device Y1 measures the solder paste printed on the board 2-dimensionally or 3-dimensionally and determines whether the solder paste has normal values (allowable ranges) of various inspection items from the measurement result. As the inspection items, for example, there are a volume, an area, a height, a position deviation, and a shape of the solder. In the 2-dimensional measurement of the solder paste, an image sensor (camera) or the like can be used. In the 3-dimensional measurement, a laser displacement sensor, a phase shift method, a space coding method, a space switching method, or the like can be used.

The component inspection device Y2 is a device that inspects disposition states of electronic components on the board carried out from the mounter X2. The component inspection device Y2 measures components (some of the components such as component bodies and electrodes) placed on the solder paste 2-dimensionally or 3-dimensionally, and determines whether the components have normal values (allowable ranges) of various inspection items from the measurement results. As the inspection items, for example, there are a position deviation of the components, an angle (rotation) deviation, a defective product (components are not disposed), a component difference (different components are disposed), a polarity difference (polarities of electrodes on a component side and a board side are different), front-back inversion (components are disposed in the back direction), and a component height. As in the solder printing inspection, in the 2-dimensional measurement of the electronic components, an image sensor (camera) or the like can be used. In the 3-dimensional measurement, a laser displacement sensor, a phase shift method, a space coding method, a space switching method, or the like can be used.

The exterior inspection device Y3 is a device that inspects qualities of solder portions on the board carried out from the reflow furnace X3. The exterior inspection device Y3 measures the solder portions after a reflow 2-dimensionally or 3-dimensionally and determines whether the solder portion has normal values (allowable ranges) of various inspection items from the measurement result. The inspection items include a quality or the like of a solder fillet shape in addition as the same items as the component inspection. In the measurement of the shape of the solder, a so-called color highlight scheme (a method of detecting a 3-dimensional shape of solder as 2-dimensional color information by lighting R, G, and B to a solder surface at different incident angles and imaging reflected light of each color using a zenith camera) can be used in addition to the laser displacement sensor, the phase shift method, the space coding method, the space switching method, or the like described above.

The X-ray inspection device Y4 is a device that inspects states of solder portions on the board using an X-ray image. For example, in the case of a multi-layered board or a package component such as a ball grid array (BGA) or a chip size package (CSP), a solder bonding portion is hidden in components or below a board. Therefore, solder states may not be inspected by the exterior inspection device Y3 (that is, in an exterior image). The X-ray inspection device Y4 is a device that complements weakness of such exterior inspection. As inspection items of the X-ray inspection device Y4, for example, there are a position deviation of component, a solder height, a solder volume, a solder ball diameter, the length of a back fillet, and a quality of solder bonding. As an X-ray image, an X-ray transmission image may be used or a computed tomography (CT) mage may be preferably used.

(Management device)

The manufacturing devices X1 to X3 and the inspection devices Y1 to Y4 described above are connected to the management device 1 via a network (LAN). The management device 1 is a system that serves as managing or controlling the manufacturing devices X1 to X3 and the inspection devices Y1 to Y4 and is configured as a general-purpose computer system that includes a CPU (processor), a main storage device (a memory), an auxiliary storage device (a hard disk or the like), an input device (a keyboard, a mouse, a controller, a touch panel, and the like), and a display device. The function of the management device 1 to be described below is realized by causing a CPU to read a program stored in the auxiliary storage device and execute the program.

The management device 1 may be configured by one computer or may be configured by a plurality of computers. Alternatively, some or all of the functions of the management device 1 can also be mounted on a computer contained in one device of the manufacturing devices X1 to X3 or the inspection devices Y1 to Y4. Alternatively, some of the functions of the management device 1 may be realized by a server (a cloud server or the like) on a network.

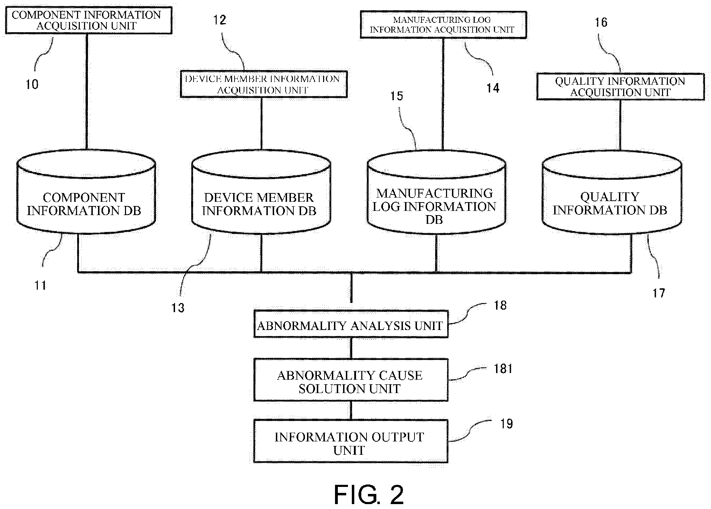

The management device 1 according to the embodiment has a function of identifying a cause of abnormality (hereinafter referred to as an abnormality cause identifying function) when the abnormality occurs in a quality of the printed board obtained from the inspection performed in the inspection devices Y1 to Y4, and a function of solving the identified cause of the abnormality (hereinafter referred to as an abnormality cause solution function). FIG. 2 is a block diagram illustrating functions of the management device 1.

As illustrated in FIG. 2, the management device 1 includes a component information acquisition unit 10, a component information database (DB) 11, a device member information acquisition unit 12, a device member information DB 13, a manufacturing log information acquisition unit 14, a manufacturing log information DB 15, a quality information acquisition unit 16, a quality information DB 17, an abnormality analysis unit 18, and an information output unit 19. The component information acquisition unit 10 is a function of acquiring information regarding components such as various electronic components, a board, and solder used in the surface mount line. The component information DB 11 is a storage unit that stores component information. The device member information acquisition unit 12 is a function of acquiring information regarding various members or mechanisms included in the manufacturing devices X1 to X3. The device member information DB 13 is a storage unit that stores device member information. The manufacturing log information acquisition unit 14 is a function of acquiring manufacturing log information from the manufacturing devices X1 to X3. The manufacturing log information DB 15 is a storage unit that stores the manufacturing log information. The quality information acquisition unit 16 is a function of acquiring the inspection result information from the inspection devices Y1 to Y4. The quality information DB 17 is a storage unit that stores quality information including the inspection result information. The abnormality analysis unit 18 is a function of determining a component in which there is abnormality among the components on the printed board from the inspection result information, the manufacturing log information, the device member information, and the component information and identifying a cause of the abnormality when there is the abnormality. An abnormality cause solution unit 181 is a function of performing a process of solving the identified cause. The information output unit 19 is a function of outputting information such as quality information, an abnormality occurrence spot, or a method of solving the cause of the abnormality of each component included in a printed board for each device member or each number of the component.

Hereinafter, an operation of each function unit of the management device 1 will be described using an example of the mounter X2.

(Mounter)

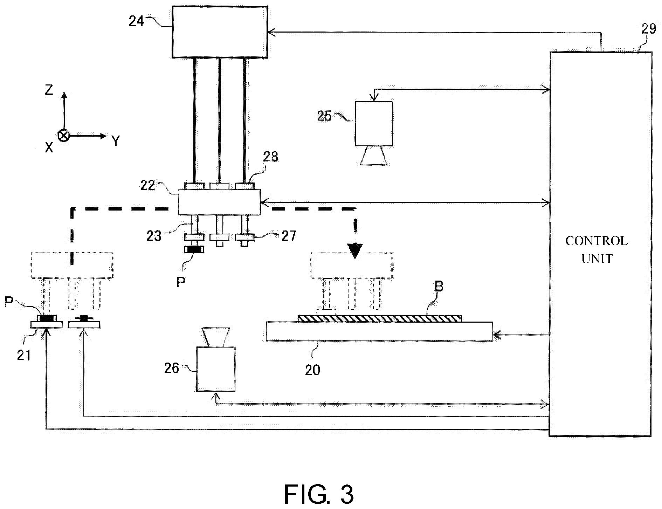

FIG. 3 is a diagram schematically illustrating a configuration of the mounter X2. The mounter X2 includes a stage 20 on which a board B is placed, a plurality of feeders 21 that supply an electronic component P, a movable head 22 that picks up the electronic component P, a plurality of nozzles 23 mounted on the head 22, and a vacuum pump 24 that controls an air pressure of each nozzle. The electronic component P with a different number is set in the feeder 21 in each row. The mounter X2 includes an upper camera 25, a lower camera 26, a contact sensor 27 that measures a contact pressure on a nozzle end surface, and a pressure sensor 28 that measures an air pressure of the nozzle as an observation system that detects abnormality of an operation of the mounter X2. A control unit 29 is a block that processes control, calculation, and information processing of each unit of the mounter X2 and includes a CPU (processor) and a memory. The control unit 29 may include an output device that outputs information. In a coordinate system, the X and Y axes are taken to be parallel to the surface of the board and the Z axis is taken to be vertical to the surface of the board.

When the board B is carried in on the stage 20, the control unit 29 controls each nozzle 23 in accordance with the mounting program such that the necessary electronic components P are adsorbed and transported from the feeders 21 and are disposed on the board B in sequence. When disposing (mounting) of all the electronic components is completed, the board B is carried out to a downstream process (the inspection device Y2). As manufacturing information of the board B, a board ID, a component number of each component, a circuit number, and manufacturing lot information associated with information (a nozzle ID and a feeder ID) indicating a device member processing each component are recorded in a memory of the mounter X2.

(Data collection by management device)

The component information acquisition unit 10 acquires information regarding the components and stores the information in the component information DB 11. The information can be acquired at any timing. For example, when components are newly introduced to the production line or components with manufacturing lot differences of existing component numbers are input to the production line, the information may be acquired. A method of acquiring the information may be, for example, a method of automatically acquiring information from the server of a component maker via a network or may be a method of acquiring information input by a user.

The device member information acquisition unit 12 acquires information regarding the device member and stores the information in the device member information DB 13. The information can be acquired at any timing. For example, when the device member is exchanged or maintenance or the like is performed or a new device member is introduced to the production line, the information may be acquired. A method of acquiring the information may be, for example, a method of automatically acquiring information from the server of a manufacturing device maker via a network or may be a method of acquiring information input by a user.

The manufacturing log information acquisition unit 14 acquires manufacturing log information from the mounter X2 and stores the manufacturing log information in the manufacturing log information DB 15. The manufacturing log information can be acquired at any timing. For example, whenever mounting of a board in the mounter X2 is completed, the control unit 29 of the mounter X2 may transmit the manufacturing log information to the management device 1. Alternatively, the manufacturing log information acquisition unit 14 may acquire information at a time or a frequency decided in advance or may acquire information in response to an acquisition request from a user.

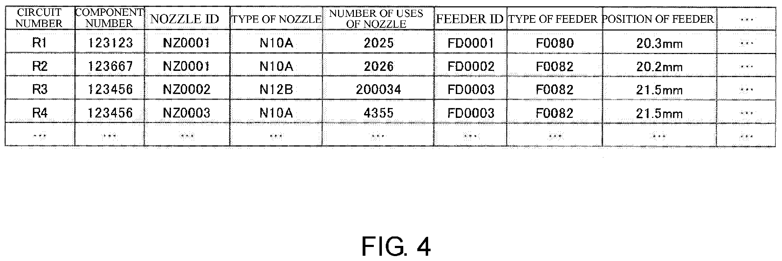

FIG. 4 illustrates an example of the manufacturing log information acquired from the mounter X2. Each row is a manufacturing record of one component and includes information such as a board ID, a component number, a circuit number, a nozzle ID, a feeder ID, and mounting start and completion times. By referring to the manufacturing log information, it is possible to know a device member (a nozzle and a feeder) by which each component on the board is manufactured.

The quality information acquisition unit 16 acquires inspection result information from the inspection devices Y1 to Y4 and stores the inspection result information in the quality information DB 17. The inspection result information can be acquired at any timing. For example, whenever inspection is performed by each inspection device, each inspection device may transmit inspection result information to the management device 1. Alternatively, the quality information acquisition unit 16 may acquire information from each inspection device at a time or a frequency decided in advance or may acquire information from the inspection device in response to an acquisition request from a user.

The quality information may include an inspection result, that is, a defective or good determination result in addition to a measured value of inspection by each inspection device. When the inspection result is included, types of defects may be included. A quality index such as a process capability may be included as quality information. The process capability is a capability to produce a product within a determined specification limit. As process capability indexes, there are Cpk and Cp.

Cpk is calculated using pieces of inspection result information of a plurality of products by the following expression:

$$\text{In the case of only an upper-side specification, } Cpk = Cpu = (\text{upper limit specification value - average value}) \, 3\sigma \tag{1}$$

$$\text{In the case of only a lower-side specification, } Cpk = Cpl = (\text{average value - lower limit specification value}) \, 3\sigma \tag{2}$$

## (3) In the case of both-side specification, Cpk = min (Cpu, Cpl)

Here, 0 is assumed when Cpk is negative. $\sigma$ is a standard deviation.

CP is calculated by the following expression.

Cp = (upper-side specification value - lower-side specification value)/6$\sigma$

For the upper-side specification value and the lower-side specification value, a management standard is used.

(Identifying cause of abnormality)

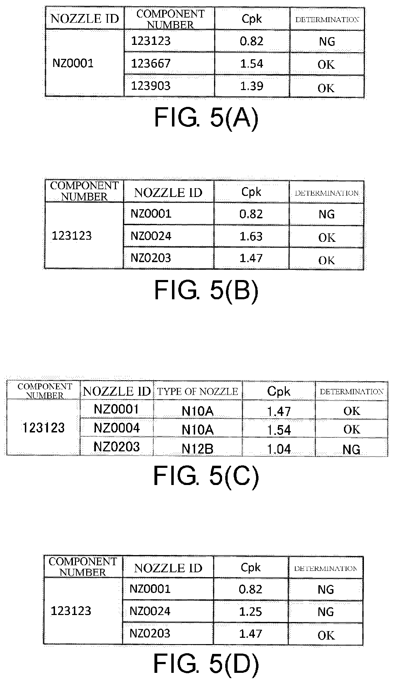

Next, a process of identifying a cause of abnormality in the abnormality analysis unit 18 will be described. FIG. 5(A) is a diagram illustrating a correspondent relation among the component information, the device member information, and the quality information when three component numbers of 123123, 123667, and 123903 are mounted on the nozzle with an ID NZ0001. Here, a value of Cpk as a quality index and an abnormality presence or absence result obtained using the value of Cpk as a determination standard for presence or absence of abnormality are displayed. A determination standard value of Cpk is 1.33.

As a result of comparison between the manufacturing log information and the quality information, as illustrated in FIG. 5(A), it is recognized that Cpk is less than 1.33 in only a combination of the nozzle ID NZ0001 and a component number 123123. Therefore, this combination is determined to have a problem.

In this stage, it is proved that there is abnormality in the combination of the nozzle ID of NZ0001 and a component number 123123. However, whether a specific cause of the abnormality is the nozzle, the component, or the combination of the nozzle and the component is not clear.

Here, since the component number 123123 is also mounted on the nozzles with the IDs, NZ0024 and NZ0203, in addition to NZ0001, Cpk is calculated in each combination. Figs. 5(B) to 5(D) are diagrams illustrating correspondent relations among the component information, the device member information, and the quality information when the component with the component number 123123 is mounted on the nozzles with the IDs, NZ0001, NZ0024, and NZ0203. Even in this case, as illustrated in FIG. 5(B), when Cpk is less than 1.33 in only the combination of the component number 123123 and the nozzle ID of NZ0001, it is determined that there is a problem in only this combination. In this case, it can be identified that there is no cause of abnormality in both the nozzle with ID NZ0001 and the component with the component number 123123 and there is the problem in this combination.

Further, in the table illustrated in FIG. 5(C), the nozzle type information obtained from the device member information is compared for the nozzles of NZ0001, NZ0024, and NZ0203. Then, it can be known that the type of nozzle is N12B for only NZ0203 and is different from that of the other two nozzles, and there is abnormality. In this case, it can be identified that there is a cause in the combination of the component number 123123 and the type of nozzle N12B. Additionally, a cause of abnormality may be identified by comparing mounting parameter of each nozzle as the device member information. In this case, when a mounting parameter is different from other mounting parameters and there is abnormality, it can be identified that there is a problem in the mounting parameter.

On the other hand, when the component number 123123 is mounted on the nozzles with NZ0001, NZ0024, and NZ0203 and Cpk is less than 1.33 in a plurality of combinations (see FIG. 5(D)), it can be identified that there is a problem in the component rather than in the nozzles.

(Solving cause of abnormality)

Next, a process of solving a cause of abnormality in the abnormality cause solution unit 181 will be described. When a cause of abnormality is identified, as described above, the abnormality cause solution unit 181 causes the information output unit 19 to output information for solving the cause of the abnormality as an example of the process of solving the cause of the abnormality.

For example, when there is a cause of abnormality in a combination of a nozzle and a component, a message "Please confirm mounting parameters of nozzle ID NZ0001 and component number 100222" is displayed on the display device. The abnormality cause solution unit 181 may acquire appropriate mounting parameters of the nozzle ID NZ0001 and the component number 100222 from the server and may automatically change the mounting parameters. Further, before the mounting parameters are changed, a user may be requested to permit the change. For example, a message "Mounting parameters of nozzle ID NZ0001 and component number 100222 are changed to appropriate values. Is it OK?" may be displayed on the display device and a user manipulation may be received.

The abnormality cause solution unit 181 does not necessarily perform the process of solving a cause of abnormality even when the cause of the abnormality is identified. For example, when cost of the solution to a cause of abnormality is greater than cost of prevention of the cause of the abnormality, it is not necessary to immediately perform the process of solving the cause of the abnormality. Whether the process of solving the cause of the abnormality is performed may be determined in accordance with, for example, a threshold determined in advance.

(Advantages of embodiment)

According to the configuration of the above-described embodiment, when there is abnormality in a certain component included in a product, it is possible to prevent wrong measures from being taken, such as unnecessary maintenance, exchange of a member, or a change in a mounting parameter to specifically identify the cause of the abnormality, and thus it is possible to suppress occurrence of an unnecessary man-hour.

In the foregoing embodiment, the processes in the mounter have been exemplified, but a cause of abnormality can also be identified in the solder printing device or the reflow furnace in accordance with the same method and the cause of the abnormality can be solved. Furthermore, in the foregoing embodiment, the surface mount line has been exemplified. However, the disclosure can be applied as long as a production line includes a manufacturing device and an inspection device. The disclosure can also be applied to a manufacturing device in which an inspection unit is combined.

[Reference Signs List]

X1: Solder printing device
X2: Mounter
X3: Reflow furnace
Y1: Solder printing inspection device
Y2: Component inspection device
Y3: Exterior inspection device
Y4: X-ray inspection device
1: Management device
10: Component information acquisition unit
11: Component information DB
12: Device member information acquisition unit
13: Device member information DB
14: Manufacturing log information acquisition unit
15: Manufacturing log information DB
16: Quality information acquisition unit
17: Quality information DB
18: Abnormality analysis unit
181: Abnormality cause solution unit
19: Information output unit
20: Stage
21: Feeder
22: Head
23: Nozzle
24: Vacuum pump
25: Upper camera
26: Lower camera
27: Contact sensor
28: Pressure sensor
29: Control unit
B: Board
P: Electronic component

**Claims**

1.  A management system (9), for manufacturing equipment that manufactures a product by mounting components to a printed board,

    wherein the manufacturing equipment including one or more manufacturing devices (X1, X2, X3) including one or more device members and one or more inspection units (Y1, Y2, Y3) that inspect a quality of the product,

wherein the management system (9) is comprising:

a component information acquisition unit (10, 921), configured to acquire component information for each of the components of the product, wherein the component information comprises a component number;

a device member information acquisition unit (12, 922), configured to acquire device member information regarding each of the one or more device members of the one or more manufacturing devices (X1, X2, X3), wherein the device member information comprises a type;

a quality information acquisition unit (16, 923), configured to acquire (S101) quality information regarding each of the components including an inspection result obtained by the one or more inspection units (Y1, Y2, Y3);

an abnormality analysis unit (18, 924), configured to determine (S103) whether there is abnormality in each combination of the component numbers with the one or more device members; and

an abnormality cause solution unit (925) to identify a cause of the abnormality, using the quality information;

**characterized in that** the abnormality analysis unit (18, 924) is configured to:

determine (S104) whether the number of combinations with the abnormality is one combination or a plurality of combinations;

when the number of combinations with the abnormality is plural, identify (S105) that there is a cause of the abnormality in one of the one or more device members;

when the number of combinations with the abnormality is singular, confirm (S106) whether a component number of the component with abnormality is also mounted on the same type of different of the one or more device members;

when the component number of the component is not mounted on another of the one or more device members, identify (S107) that the abnormality is in the component or the combination of the one of the one or more device members and the component number;

when the component number with the abnormality is mounted on the same type of plurality of the one or more device members, determine (S108) whether there is the abnormality in each combination of the component number and the same type of plurality of the one or more device member;

when there is only one combination with the abnormality, identify (S109) that there is a cause of the abnormality in the combination of the device member and the one of the one or more component numbers; and

when the number of combinations with the abnormality is plural, identify (S1 10) that there is the cause of the abnormality in the component.

2. The management system (9) according to claim 1, wherein the quality information acquisition unit (923) is the inspection unit in a final inspection process of the product.

3. The management system (9) according to claim 1 or 2, wherein the abnormality analysis unit is configured to identify the cause and determine whether there is the abnormality based on the quality information, the device member information, and the component information.

4. The management system (9) according to any one of claims 1 to 3, wherein in accordance with a quality index generated based on the quality information, the abnormality analysis unit (8, 924) is configured to determine whether there is the abnormality in each of the components.

5. The management system (9) according to any one of claims 1 to 4, wherein the abnormality analysis unit (8, 924) is configured to automatically determine whether there is the abnormality in each of the components and the cause of the abnormality is automatically identified.

6. The management system (9) according to any one of claims 1 to 5, further comprising:
an abnormality cause solution unit (925) configured to perform a process of solving the cause of the abnormality wherein, when the abnormality analysis unit identifies the cause of the abnormality.

7. The management system (9) according to claim 6, wherein the process performed by the abnormality cause solution unit (925) is configured to cause the manufacturing device (X1, X2, X3) to perform a method of solving the cause of the abnormality identified by the abnormality cause identifying unit, present the method of solving the identified cause of the abnormality to a user, or cause the manufacturing device to perform the method of solving the identified cause of the abnormality by a permission given by the user.

8. The management system (9) according to any one of claims 1 to 7, further comprising:

an output unit (19, 926),
wherein the output unit (19, 926) is configured to output the quality information regarding the components included in the product for each device member and/or each component.

9. The management system (9) according to claim 8, wherein the output unit (19, 926) is a display device and the quality information regarding the components included in the product is output visually.

10. The management system (9) according to any one of claims 1 to 9,

wherein the manufacturing equipment is a surface mount line of a printed board, and
wherein the manufacturing device is one of a solder printer, a mounter, and a reflow furnace.

11. The management system (9) according to claim 10, wherein the quality information acquisition unit (16, 923) is an inspection unit after a reflow.

12. A management method for manufacturing equipment that manufactures a product by mounting components to a printed board, the manufacturing equipment including one or more manufacturing devices (X1, X2, X3) including one or more device members and one or more inspection units (Y1, Y2, Y3) that inspect a quality of the product, the management method comprising:

acquiring (S101) component information for each component of the product and storing the component information in a storage device by a computer (1), wherein the component member information comprises a component number;
acquiring (S102) device member information regarding each of the one or more device members of the one or more manufacturing devices and storing the device member information in the storage device by the computer (1), wherein the device member information comprises a type;
acquiring quality information regarding each of the components including an inspection result obtained by the one or more inspection units (Y1, Y2, Y3) and storing the quality information in the storage device by the computer (1);
determining (S103) whether there is abnormality in each combination of the one ore more component numbers with the one or more device members and identifying a cause of the abnormality, using the quality information by the computer (1)

determining (S104) whether the number of combinations with the abnormality is one combination of one component number with one of the one or more device members or a plurality of combinations of several component numbers with one of the one or more device members ;
identifying (S105) that there is a cause of the abnormality in the device member, when the number of combinations with the abnormality are the plurality of combinations;
determining (S106) whether another of the one or more components with the component number having the abnormality is also mounted on another of the one or more device members having the same type, when the number of combinations with the abnormality is the one combination;
identifying (S107) that the abnormality is in the component or the combination of the device members with the component number, when the component number having the abnormality is not mounted on another of the one or more device members;
determining (S108) whether the abnormality is in each of the combinations of the component number with the one or more device members having the same type, when the component having the component number having the abnormality is mounted on another of the one or more device members of the same type;
identifying (S109) that there is a cause of the abnormality in the combination of the component number with the device members, when the number of combinations with the abnormality is one combination of one of the one or more component numbers with one of the one or more device members of the same type; and
identifying (S110) that there is the cause of the abnormality in the component, when the number of combinations with the abnormality are a plurality of combinations of one of the one or more component numbers with several of the one or more device members of the same type.

13. A program that is executed by a computer (1), the program causing the computer (1) to perform the management method according to claim 12.

**Patentansprüche**

1. Managementsystem (9) für Fertigungsanlagen, die ein Produkt durch Anbringen von Komponenten auf einer Leiterplatte fertigen,

   wobei die Fertigungsanlagen eine oder mehrere Fertigungsvorrichtungen (X1, X2, X3) umfassen, die ein oder mehrere Vorrichtungselemente und eine oder mehrere Prüfeinheiten (Y1, Y2, Y3), die eine Qualität des Produkts prüfen, enthalten,
   wobei das Managementsystem (9) Folgendes umfasst:

   eine Komponenteninformationserfassungseinheit (10, 921), die konfiguriert ist, Komponenteninformationen für jede der Komponenten des Produkts zu erfassen, wobei die Komponenteninformationen eine Komponentennummer umfassen;
   eine Vorrichtungselementinformations-Erfassungseinheit (12, 922), die konfiguriert ist, Vorrichtungselementinformationen bezüglich jedes des einen oder der mehreren Vorrichtungselemente der einen oder der mehreren Fertigungsvorrichtungen (X1, X2, X3) zu erfassen, wobei die Vorrichtungselementinformationen einen Typ umfassen;
   eine Qualitätsinformations-Erfassungseinheit (16, 923), die konfiguriert ist, Qualitätsinformationen bezüglich jeder der Komponenten, die ein Prüfergebnis enthalten, das durch die eine oder die mehreren Prüfeinheiten (Y1, Y2, Y3) erhalten wurde, zu erfassen;
   eine Unregelmäßigkeitsanalyseeinheit (18, 924), die konfiguriert ist, zu bestimmen (S103), ob es in jeder Kombination der Komponentennummer mit dem einen oder den mehreren Vorrichtungselementen eine Unregelmäßigkeit gibt; und
   eine Unregelmäßigkeitsursachen-Lösungseinheit (925), um eine Ursache der Unregelmäßigkeit unter Verwendung der Qualitätsinformationen zu identifizieren;
   **dadurch gekennzeichnet, dass** die Unregelmäßigkeitsanalyseeinheit (18, 924) konfiguriert ist zum:

   Bestimmen (S104), ob die Anzahl von Kombinationen mit der Unregelmäßigkeit eine Kombination oder mehrere Kombinationen sind;
   dann, wenn die Anzahl von Kombinationen mit der Unregelmäßigkeit mehrfach ist, Identifizieren (S105), dass es eine Ursache der Unregelmäßigkeit in einem des einen oder der mehreren Vorrichtungselemente gibt;
   dann, wenn die Anzahl von Kombinationen mit der Unregelmäßigkeit einfach ist, Bestätigen (S106), ob eine Komponentennummer der Komponente mit der Unregelmäßigkeit auch auf demselben Typ eines anderen des einen oder der mehreren Vorrichtungselemente angebracht ist;
   dann, wenn die Komponentennummer der Komponente nicht auf einem anderen des einen oder der mehreren Vorrichtungselemente angebracht ist, Identifizieren (S107), dass die Unregelmäßigkeit in der Komponente oder der Kombination des einen des einen oder der mehreren Vorrichtungselemente und der Komponentennummer ist;
   dann, wenn die Komponentennummer mit der Unregelmäßigkeit auf demselben Typ von mehreren des einen oder der mehreren Vorrichtungselemente angebracht ist, Bestimmen (S108), ob es die Unregelmäßigkeit in jeder Kombination der Komponentennummer und demselben Typ von mehreren des einen oder der mehreren Vorrichtungselemente gibt;
   dann, wenn es nur eine Kombination mit der Unregelmäßigkeit gibt, Identifizieren (S109), dass es eine Ursache der Unregelmäßigkeit in der Kombination des Vorrichtungselements und des einen der einen oder der mehreren Komponentennummern gibt; und
   dann, wenn die Anzahl von Kombinationen mit der Unregelmäßigkeit mehrfach ist, Identifizieren (S110), dass dort die Ursache für die Unregelmäßigkeit in der Komponente ist.

2. Managementsystem (9) nach Anspruch 1, wobei die Qualitätsinformations-Erfassungseinheit (923) die Prüfeinheit in einem letzten Prüfvorgang des Produkts ist.

3. Managementsystem (9) nach Anspruch 1 oder 2, wobei die Unregelmäßigkeitsanalyseeinheit konfiguriert ist, anhand der Qualitätsinformationen, der Vorrichtungselementinformationen und der Komponenteninformationen die Ursache zu identifizieren und zu bestimmen, ob es die Unregelmäßigkeit gibt.

**4.** Managementsystem (9) nach einem der Ansprüche 1 bis 3, wobei in Übereinstimmung mit einem Qualitätsindex, der anhand der Qualitätsinformationen erzeugt wird, die Unregelmäßigkeitsanalyseeinheit (8, 924) konfiguriert ist, zu bestimmen, ob es die Unregelmäßigkeit in jeder der Komponenten gibt.

**5.** Managementsystem (9) nach einem der Ansprüche 1 bis 4, wobei die Unregelmäßigkeitsanalyseeinheit (8, 924) konfiguriert ist, automatisch zu bestimmen, ob es die Unregelmäßigkeit in jeder der Komponenten gibt und die Ursache der Unregelmäßigkeit automaisch identifiziert ist.

**6.** Managementsystem (9) nach einem der Ansprüche 1 bis 5, das ferner umfasst:
eine Unregelmäßigkeitsursachen-Lösungseinheit (925), die konfiguriert ist, einen Vorgang des Lösens der Ursache der Unregelmäßigkeit auszuführen, wobei dann, wenn die Unregelmäßigkeitsanalyseeinheit die Ursache der Unregelmäßigkeit identifiziert.

**7.** Managementsystem (9) nach Anspruch 6, wobei der Vorgang, der durch die Unregelmäßigkeitsursachen-Lösungseinheit (925) ausgeführt wird, konfiguriert ist, zu bewirken, dass die Fertigungsvorrichtung (X1, X2, X3) ein Verfahren zum Lösen der Ursache der durch die Unregelmäßigkeitsursachen-Identifzierungseinheit identifizierten Unregelmäßigkeit ausführt, das Verfahren des Lösens der identifizierten Ursache der Unregelmäßigkeit einem Anwender darstellt oder bewirkt, dass die Fertigungsvorrichtung das Verfahren des Lösens der identifizierten Ursache der Unregelmäßigkeit durch eine durch den Anwender gegebene Genehmigung ausführt.

**8.** Managementsystem (9) nach einem der Ansprüche 1 bis 7, das ferner Folgendes umfasst:

eine Ausgabeeinheit (19, 926),
wobei die Ausgabeeinheit (19, 926) konfiguriert ist, die Qualitätsinformationen bezüglich der Komponenten, die in dem Produkt enthalten sind, für jedes Vorrichtungselement und/oder jede Komponente auszugeben.

**9.** Managementsystem (9) nach Anspruch 8, wobei die Ausgabeeinheit (19, 926) eine Anzeigevorrichtung ist und die Qualitätsinformationen bezüglich der Komponenten, die in dem Produkt enthalten sind, visuell ausgegeben werden.

**10.** Managementsystem (9) nach einem der Ansprüche 1 bis 9,

wobei das Herstellungsgerät eine Oberflächenmontageleitung einer Leiterplatte ist und
wobei die Fertigungsvorrichtung ein Lötdrucker, ein Montagegerät oder ein Reflow-Ofen ist.

**11.** Managementsystem (9) nach Anspruch 10, wobei die Qualitätsinformations-Erfassungseinheit (16, 923) eine Prüfeinheit nach einem Reflow ist.

**12.** Managementverfahren für Fertigungsanlagen, die ein Produkt durch Anbringen von Komponenten auf einer Leiterplatte herstellen, wobei die Fertigungsanlagen eine oder mehrere Fertigungsvorrichtungen (X1, X2, X3) enthalten, die ein oder mehrere Vorrichtungselemente und eine oder mehrere Prüfeinheiten (Y1, Y2, Y3), die eine Qualität des Produkts prüfen, enthalten,
wobei das Managementverfahren umfasst:

Erfassen (S101) von Komponenteninformationen für jede Komponente des Produkts und Speichern der Komponenteninformationen in einer Speichervorrichtung durch einen Computer (1), wobei die Komponentenelementinformationen eine Komponentennummer umfassen;
Erfassen (S102) von Vorrichtungselementinformationen bezüglich jedes des einen oder der mehreren Vorrichtungselemente der einen oder der mehreren Fertigungsvorrichtungen und Speichern der Vorrichtungselementinformationen in der Speichervorrichtung durch den Computer (1), wobei die Vorrichtungselementinformationen einen Typ umfassen;
Erfassen von Qualitätsinformationen bezüglich jeder der Komponenten, die ein Prüfergebnis enthalten, das durch die eine oder die mehreren Prüfeinheiten (Y1, Y2, Y3) erhalten wurde, und Speichern der Qualitätsinformationen in der Speichervorrichtung durch den Computer (1);
Bestimmen (S103), ob es eine Unregelmäßigkeit in jeder Kombination der einen oder der mehreren Komponentennummern mit dem einen oder den mehreren Vorrichtungselementen gibt, und Identifizieren einer Ursache der Unregelmäßigkeit unter Verwendung der Qualitätsinformationen durch den Computer (1);
Bestimmen (S104), ob die Anzahl von Kombinationen mit der Unregelmäßigkeit eine Kombination einer Komponentennummer mit einem des einen oder der mehreren Vorrichtungselemente oder mehrere Kombinationen einiger Komponentennummern mit einem des einen oder der mehreren Vorrichtungselemente ist;

Identifizieren (S 105), dass es eine Ursache der Unregelmäßigkeit in dem Vorrichtungselement gibt, wenn die Anzahl von Kombinationen mit der Unregelmäßigkeit mehrere Kombinationen sind;

Bestimmen (S106), ob eine andere der einen oder der mehreren Komponenten mit der Komponentennummer, die die Unregelmäßigkeit aufweisen, auch auf einem anderen des einen oder der mehreren Vorrichtungselemente mit demselben Typ angebracht ist, wenn die Anzahl von Kombinationen mit der Unregelmäßigkeit die eine Kombination ist;

Identifizieren (S 107), dass die Unregelmäßigkeit in der Komponente oder der Kombination der Vorrichtungselemente mit der Komponentennummer ist, wenn die Komponentennummer mit der Unregelmäßigkeit nicht auf einem anderen des einen oder der mehreren Vorrichtungselemente angebracht ist;

Bestimmen (S108), ob die Unregelmäßigkeit in jeder der Kombinationen der Komponentennummer mit dem einen oder den mehreren Vorrichtungselementen mit demselben Typ ist, wenn die Komponente mit der Komponentennummer, die die Unregelmäßigkeit aufweist, auf einem anderen des einen oder der mehreren Vorrichtungselemente desselben Typs angebracht ist;

Identifizieren (S109), dass es eine Ursache der Unregelmäßigkeit in der Kombination der Komponentennummer mit den Vorrichtungselementen gibt, wenn die Anzahl von Kombinationen mit der Unregelmäßigkeit eine Kombination einer der einen oder der mehren Komponentennummern mit einem des einen oder der mehreren Vorrichtungselemente desselben Typs ist; und

Identifizieren (S110), dass die Ursache der Unregelmäßigkeit in der Komponente ist, wenn die Anzahl von Kombinationen mit der Unregelmäßigkeit mehrere Kombinationen einer der einen oder der mehreren Komponentennummern mit einigen des einen oder der mehreren Vorrichtungselemente desselben Typs sind.

13. Programm, das durch einen Computer (1) ausgeführt wird, wobei das Programm bewirkt, dass der Computer (1) das Managementverfahren nach Anspruch 12 ausführt.

## Revendications

1. Système de gestion (9), pour un équipement de fabrication qui fabrique un produit en montant des composants sur une carte imprimée,

dans lequel l'équipement de fabrication inclut un ou plusieurs dispositifs de fabrication (X1, X2, X3) incluant un ou plusieurs éléments de dispositif et une ou plusieurs unités d'inspection (Y1, Y2, Y3) qui inspectent une qualité du produit,

dans lequel le système de gestion (9) comporte :

une unité d'acquisition d'informations de composant (10, 921), configurée pour acquérir des informations de composant pour chacun des composants du produit, dans lequel les informations de composant comportent un numéro de composant ;

une unité d'acquisition d'informations d'élément de dispositif (12, 922), configurée pour acquérir des informations d'élément de dispositif concernant chacun des éléments de dispositif du ou des dispositifs de fabrication (X1, X2, X3), dans lequel les informations d'élément de dispositif comportent un type ;

une unité d'acquisition d'informations de qualité (16, 923), configurée pour acquérir (S101) des informations de qualité concernant chacun des composants incluant un résultat d'inspection obtenu par l'unité ou les unités d'inspection (Y1, Y2, Y3) ;

une unité d'analyse d'anomalie (18, 924), configurée pour déterminer (S103) si une anomalie existe dans chaque combinaison des numéros de composant avec l'élément ou les éléments de dispositif; et

une unité de résolution de cause d'anomalie (925) pour identifier une cause de l'anomalie, en utilisant les informations de qualité ;

**caractérisé en ce que** l'unité d'analyse d'anomalie (18, 924) est configurée pour :

déterminer (S104) si le nombre de combinaisons avec l'anomalie est une combinaison ou une pluralité de combinaisons ;

lorsque le nombre de combinaisons avec l'anomalie est pluriel, identifier (S105) qu'une cause de l'anomalie existe dans l'élément ou les éléments de dispositif ;

lorsque le nombre de combinaisons avec l'anomalie est singulier, confirmer (S106) si un numéro de composant du composant avec l'anomalie est également monté sur le même type de l'élément ou des éléments de dispositif différents;

lorsque le numéro de composant du composant n'est pas monté sur l'autre élément ou les autres éléments de dispositif, identifier (S107) que l'anomalie se trouve dans le composant ou la combinaison de l'élément ou des éléments de dispositif et du numéro de composant ;

lorsque le numéro de composant avec l'anomalie est monté sur le même type d'une pluralité de l'élément ou des éléments de dispositif, déterminer (S108) si l'anomalie existe dans chaque combinaison du numéro de composant et du même type de la pluralité de l'élément ou des éléments de dispositif ;

lorsqu'il n'existe qu'une seule combinaison avec l'anomalie, identifier (S109) qu'une cause de l'anomalie existe dans la combinaison de l'élément de dispositif et du numéro ou des numéros de composant ; et

lorsque le nombre de combinaisons avec l'anomalie est pluriel, identifier (5110) que la cause de l'anomalie existe dans le composant.

2. Système de gestion (9) selon la revendication 1, dans lequel l'unité d'acquisition d'informations de qualité (923) est l'unité d'inspection dans un processus d'inspection finale du produit.

3. Système de gestion (9) selon la revendication 1 ou 2, dans lequel l'unité d'analyse d'anomalie est configurée pour identifier la cause et déterminer si l'anomalie existe sur la base des informations de qualité, des informations d'élément de dispositif et des informations de composant.

4. Système de gestion (9) selon l'une quelconque des revendications 1 à 3, dans lequel en fonction d'un indice de qualité généré sur la base des informations de qualité, l'unité d'analyse d'anomalie (8, 924) est configurée pour déterminer si l'anomalie existe dans chacun des composants.

5. Système de gestion (9) selon l'une quelconque des revendications 1 à 4, dans lequel l'unité d'analyse d'anomalie (8, 924) est configurée pour déterminer automatiquement si l'anomalie existe dans chacun des composants et la cause de l'anomalie est automatiquement identifiée.

6. Système de gestion (9) selon l'une quelconque des revendications 1 à 5, comportant en outre :
une unité de résolution de cause d'anomalie (925) configurée pour exécuter un processus consistant à résoudre la cause de l'anomalie lorsque l'unité d'analyse d'anomalie identifie la cause de l'anomalie.

7. Système de gestion (9) selon la revendication 6, dans lequel le processus exécuté par l'unité de résolution de cause d'anomalie (925) est configuré pour amener le dispositif de fabrication (X1, X2, X3) à mettre en oeuvre un procédé de résolution de la cause de l'anomalie identifiée par l'unité d'identification de cause d'anomalie, présenter le procédé de résolution de la cause identifiée de l'anomalie à un utilisateur, ou amener le dispositif de fabrication à mettre en oeuvre le procédé de résolution de la cause identifiée de l'anomalie par une permission donnée par l'utilisateur.

8. Système de gestion (9) selon l'une quelconque des revendications 1 à 7, comportant en outre :

une unité de sortie (19, 926),
dans lequel l'unité de sortie (19, 926) est configurée pour générer les informations de qualité concernant les composants inclus dans le produit pour chaque élément de dispositif et/ou chaque composant.

9. Système de gestion (9) selon la revendication 8, dans lequel l'unité de sortie (19, 926) est un dispositif d'affichage et les informations de qualité concernant les composants inclus dans le produit sont générées visuellement.

10. Système de gestion (9) selon l'une quelconque des revendications 1 à 9,

dans lequel l'équipement de fabrication est une ligne de montage en surface d'une carte imprimée, et
dans lequel le dispositif de fabrication est un élément parmi une imprimante à souder, un dispositif de montage et un four à reflux.

11. Système de gestion (9) selon la revendication 10, dans lequel l'unité d'acquisition d'informations de qualité est une unité d'inspection après un reflux.

12. Procédé de gestion pour un équipement de fabrication qui fabrique un produit en montant des composants sur une carte imprimée, dans lequel l'équipement de fabrication incluant un ou plusieurs dispositifs de fabrication (X1, X2, X3) incluant un ou plusieurs éléments de dispositif et une ou plusieurs unités d'inspection (Y1, Y2, Y3) qui inspectent une qualité du produit,

le procédé de gestion comportant les étapes consistant à :

acquérir (S101) des informations de composant pour chaque composant du produit et stocker les informations de composant dans un dispositif de stockage par un ordinateur (1), dans lequel les informations d'élément de composant comportent un numéro de composant ;

acquérir (S102) des informations d'élément de dispositif concernant chacun des éléments de dispositif du ou des dispositifs de fabrication et stocker les informations d'élément de dispositif dans le dispositif de stockage par l'ordinateur (1), dans lequel les informations d'élément de dispositif comportent un type ;

acquérir des informations de qualité concernant chacun des composants incluant un résultat d'inspection obtenu par l'unité ou les unités d'inspection (Y1, Y2, Y3) et stocker les informations de qualité dans le dispositif de stockage par l'ordinateur (1) ;

déterminer (S103) si une anomalie existe dans chaque combinaison du ou des numéros de composant avec l'élément ou les éléments de dispositif et identifier une cause de l'anomalie, en utilisant les informations de qualité par l'ordinateur (1)

déterminer (S104) si le nombre de combinaisons avec l'anomalie est une combinaison d'un numéro d'un composant avec l'élément ou les éléments de dispositif ou une pluralité de combinaisons de plusieurs numéros de composant avec l'élément ou les éléments de dispositif ;

identifier (S105) si une cause de l'anomalie existe dans l'élément de dispositif, lorsque le nombre de combinaisons avec l'anomalie est la pluralité de combinaisons ;

déterminer (S106) si un autre composant ou des autres composants avec le numéro de composant ayant l'anomalie est également monté sur l'autre élément ou les autres éléments de dispositif ayant le même type, lorsque le nombre de combinaisons avec l'anomalie est la combinaison ;

identifier (S107) que l'anomalie se trouve dans le composant ou la combinaison d'éléments de dispositif avec le numéro de composant, lorsque le numéro de composant ayant l'anomalie n'est pas monté sur l'autre élément ou les autres éléments de dispositif ;

déterminer (S108) si l'anomalie se trouve dans chacune des combinaisons du numéro de composant avec l'élément ou les éléments de dispositif ayant le même type, lorsque le composant ayant le numéro de composant ayant l'anomalie est monté sur l'autre élément ou les autres éléments de dispositif du même type ;

identifier (S109) qu'une cause de l'anomalie existe dans la combinaison du numéro de composant avec les éléments de dispositif, lorsque le nombre de combinaisons avec l'anomalie est une combinaison du ou des numéros de composant avec l'élément ou les éléments de dispositif du même type ; et

identifier (S110) qu'il y a la cause de l'anomalie dans le composant, lorsque le nombre de combinaisons avec l'anomalie est une pluralité de combinaisons du ou des numéros de composant avec plusieurs des éléments de dispositif du même type.

13. Programme qui est exécuté par un ordinateur (1), le programme amenant l'ordinateur (1) à mettre en oeuvre le procédé de gestion selon la revendication 12.

FIG. 1

FIG. 2

FIG. 3

| CIRCUIT NUMBER | COMPONENT NUMBER | NOZZLE ID | TYPE OF NOZZLE | NUMBER OF USES OF NOZZLE | FEEDER ID | TYPE OF FEEDER | POSITION OF FEEDER | ... |
|---|---|---|---|---|---|---|---|---|
| R1 | 123123 | NZ0001 | N10A | 2025 | FD0001 | F0080 | 20.3mm | ... |
| R2 | 123667 | NZ0001 | N10A | 2026 | FD0002 | F0082 | 20.2mm | ... |
| R3 | 123456 | NZ0002 | N12B | 200034 | FD0003 | F0082 | 21.5mm | ... |
| R4 | 123456 | NZ0003 | N10A | 4355 | FD0003 | F0082 | 21.5mm | ... |
| ... | ... | ... | ... | ... | ... | ... | ... | ... |

FIG. 4

| NOZZLE ID | COMPONENT NUMBER | Cpk | DETERMINATION |
|-----------|------------------|------|---------------|
|           | 123123           | 0.82 | NG            |
| NZ0001    | 123667           | 1.54 | OK            |
|           | 123903           | 1.39 | OK            |

## FIG. 5(A)

| COMPONENT NUMBER | NOZZLE ID | Cpk | DETERMINATION |
|------------------|-----------|------|---------------|
|                  | NZ0001    | 0.82 | NG            |
| 123123           | NZ0024    | 1.63 | OK            |
|                  | NZ0203    | 1.47 | OK            |

## FIG. 5(B)

| COMPONENT NUMBER | NOZZLE ID | TYPE OF NOZZLE | Cpk | DETERMINATION |
|------------------|-----------|----------------|------|---------------|
|                  | NZ0001    | N10A           | 1.47 | OK            |
| 123123           | NZ0004    | N10A           | 1.54 | OK            |
|                  | NZ0203    | N12B           | 1.04 | NG            |

## FIG. 5(C)

| COMPONENT NUMBER | NOZZLE ID | Cpk | DETERMINATION |
|------------------|-----------|------|---------------|
|                  | NZ0001    | 0.82 | NG            |
| 123123           | NZ0024    | 1.25 | NG            |
|                  | NZ0203    | 1.47 | OK            |

## FIG. 5(D)

MOUNTER

91

922

923

COMPONENT INFORMATION
ACQUISITION UNIT

DEVICE MEMBER INFORMATION
ACQUISITION UNIT

QUALITY INFORMATION
ACQUISITION UNIT

921

92

ABNORMALITY ANALYSIS UNIT    924

ABNORMALITY CAUSE SOLUTION
UNIT    925

INFORMATION OUTPUT UNIT    926

9

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005156156 A
- JP 2006332461 A
- EP 1071128 A2
- US 5440478 A